# FASCICULE DE BREVET EUROPEEN

(11) **EP 2 090 818 B1**
(45) Date de publication et mention de la délivrance du brevet: **22.05.2013**
(21) Numéro de dépôt: 09290102.4
(22) Date de dépôt: 12.02.2009
(51) Int. Cl.: F16L 55/11

(54) **Bouchon pour corps de valve de remplissage d'un circuit de climatisation pour véhicule automobile**
Ventilkappe für Ventilkörper zum Auffüllen eines Klimaanlagenkreislaufs für Kraftfahrzeug
Plug for the filling valve body of an automobile air-conditioning circuit

(30) Priorité: 13.02.2008 FR 0800770
(43) Date de publication de la demande: 19.08.2009
(73) Titulaire: Hutchinson, 75008 Paris (FR)
(72) Inventeur: Theau, Christophe, 45220 Chuelles (FR); Auclair, Alexandre, 45210 Ferrieres en Gâtinais (FR); Bernard, Christophe, 45700 Villemandeur (FR)
(74) Mandataire: Bolinches, Michel Jean-Marie

(56) Documents cités:
- WO-A-01/81813
- DE-A1- 1 905 845
- DE-U1- 20 005 902
- GB-A- 819 092

## Description

La présente invention concerne un bouchon pour corps de valve de remplissage en fluide frigorigène d'un circuit de climatisation pour véhicule automobile, l'ensemble de ce corps de valve et de ce bouchon qui y est vissé, et un tel circuit de climatisation dont la boucle haute pression incorpore cet ensemble.

D'une manière générale, la boucle haute pression d'un circuit de climatisation pour véhicule automobile comporte notamment, raccordés à la canalisation de circulation du fluide perpendiculairement à l'axe de celle-ci :
- un corps de valve de remplissage muni, d'une part, d'un mécanisme de valve destiné à coopérer avec un raccord de remplissage en fluide frigorigène et, d'autre part, d'un bouchon de valve (typiquement en matière plastique) positionné avant et après chaque remplissage, ce mécanisme de valve et ce bouchon étant respectivement vissés sur les faces radialement interne et externe du corps de valve, comme illustré dans les documents FR-A-2 823 828 , EP-A-1 602 872 etDE1905845, et
- un autre corps de valve ou tubulure de support pour capteur de la pression interne à la canalisation, qui est raccordé à distance de ce corps de valve et qui est muni d'un mécanisme de valve coopérant avec le capteur de pression le surmontant pourvu de sa connectique.

Un inconvénient majeur du raccordement du capteur de pression à cette canalisation haute pression du circuit de climatisation réside dans les opérations de brasage de ce support de capteur de pression et de perçage de la canalisation qui sont requises en plus de celles relatives au raccordement de la valve de remplissage, ainsi que dans le montage additionnel du mécanisme de valve à l'intérieur de ce support et du capteur de pression coopérant avec ce mécanisme.

Un but de la présente invention est de proposer un bouchon pour corps de valve de remplissage en fluide frigorigène d'un circuit de climatisation pour véhicule automobile qui permette de remédier à cet inconvénient, ce corps de valve présentant, d'une part, une face radialement interne sur laquelle est formé un filetage de valve recevant un mécanisme de valve et, d'autre part, une face radialement externe qui est destinée à être en partie recouverte par une paroi périphérique du bouchon.

A cet effet, un bouchon pour ce corps de valve selon l'invention comporte, radialement vers l'intérieur de ladite paroi périphérique, des moyens d'accès à au moins une variable de fonctionnement du circuit, telle que la pression interne de fluide réfrigérant y circulant, ces moyens étant aptes à être vissés sur ladite face radialement interne du corps de valve pour actionner réversiblement le mécanisme de valve de sorte à faire communiquer ce dernier avec une unité de mesure de ladite variable et/ou de détection d'une valeur seuil de celle-ci que comporte le bouchon.

On notera que ce bouchon pour valve de remplissage selon l'invention permet de ne pas avoir à raccorder séparément un capteur de pression à la boucle haute pression du circuit de climatisation, supprimant ainsi les opérations supplémentaires précitées de perçage, de brasage et de montage du capteur de pression sur son support. En effet, ce bouchon selon l'invention remplit à la fois la fonction de bouchon de protection du corps de valve qu'il vient fermer avant l'opération de remplissage du circuit de climatisation, et la fonction de capteur ou détecteur d'une variable de fonctionnement de ce circuit, telle que sa pression interne.

Selon une autre caractéristique de l'invention, ladite face radialement externe dudit corps de valve peut répondre à la norme SAE J639, présentant une section axiale qui est conçue pour s'adapter de manière étanche à un raccord de remplissage en fluide réfrigérant à haute pression (tel que du R134a) et qui comporte une gorge circonférentielle de section axiale sensiblement trapézoïdale destinée à coopérer avec des billes de ce raccord.

Selon une autre caractéristique de l'invention, lesdits moyens d'accès à une variable de fonctionnement dudit circuit peuvent comprendre un embout interne qui est formé coaxialement d'un seul tenant avec ladite paroi périphérique et qui, par une surface latérale radialement externe qu'il présente, est apte à être vissé sur un filetage auxiliaire formé axialement au-dessus dudit filetage de valve et qui, par un tronçon central et radial de l'embout normal à cette surface, est apte à actionner ledit mécanisme de valve via ce vissage, au moins un canal débouchant en ledit tronçon étant ménagé dans cet embout pour faire communiquer ledit mécanisme de valve avec ladite unité de mesure et/ou de détection, laquelle surmonte axialement ledit embout dans une partie supérieure du bouchon.

Avantageusement, ladite surface latérale de l'embout peut comprendre :
- une zone filetée axialement inférieure conçue pour se visser sur ledit filetage auxiliaire, et
- une zone d'étanchéité axialement supérieure entourée d'un joint d'étanchéité annulaire qui est conçu pour assurer l'étanchéité de l'espace annulaire compris entre ledit embout et ledit filetage auxiliaire en étant monté contre une portée cylindrique dudit corps de valve prolongeant axialement vers le haut ledit filetage auxiliaire.

On notera que le bouchon selon l'invention est ainsi conçu pour venir se visser sur un corps de valve pouvant être avantageusement conforme à la norme SAE précitée, à l'exception de la face radialement interne de ce corps de valve qui inclut, d'une part, ledit filetage auxiliaire pour le vissage du bouchon et, d'autre part, ladite portée prolongeant ce filetage auxiliaire pour assurer l'étanchéité entre le bouchon et le corps de valve.

Selon un exemple avantageux de réalisation de l'invention, ledit embout est traversé par une pluralité de canaux axiaux débouchant dans ledit tronçon radial de l'embout autour d'une zone centrale d'appui de ce dernier adaptée pour actionner une tige dudit mécanisme de valve.

Selon un premier mode de réalisation de l'invention, ladite unité est une unité de mesure de la pression interne au circuit de climatisation, comprenant un capteur de pression qui surmonte axialement lesdits moyens d'accès en communiquant avec ces derniers.

Selon un second mode de réalisation de l'invention, ladite unité est une unité de détection d'une valeur seuil de la pression interne au circuit de climatisation, comprenant un pressostat ou un multi interrupteur qui surmonte axialement lesdits moyens d'accès en communiquant avec ces derniers, cette unité étant apte à commander des modes de fonctionnement d'un compresseur inclus dans le circuit de climatisation et/ou à prévenir des dysfonctionnements dudit circuit.

Par « pressostat », on entend de manière connue un manocontacteur ou contacteur manométrique apte à provoquer l'arrêt du moteur du compresseur en fonction de la valeur de la pression du fluide, laquelle doit être suffisante sans pour autant excéder une valeur prédéterminée.

On notera ainsi que l'unité de mesure ou de détection selon l'invention peut permettre de piloter des modes de fonctionnement du compresseur et/ou de prévenir d'une manière générale des dysfonctionnements dans le circuit de climatisation.

Selon une autre caractéristique de l'invention, ladite unité est reliée à une connectique logée dans un fourreau, lequel peut être formé d'un seul tenant avec une partie sommitale de ladite paroi périphérique du bouchon.

Avantageusement, une partie inférieure de ladite paroi périphérique du bouchon peut être équipée d'un moyen de verrouillage du bouchon sur ledit corps de valve.

Ce moyen de verrouillage comprend de préférence une fourchette insérée de manière amovible dans des lumières en arc de cercle qui sont formées dans ladite paroi périphérique en étant conçues pour se trouver en regard d'une gorge circonférentielle que présente ledit corps de valve lorsque le bouchon est vissé sur ce dernier, de sorte que ladite fourchette se loge au fond de ladite gorge à travers ces lumières.

Ladite fourchette peut avantageusement présenter sensiblement une forme de U dont les ailes sont formées par deux branches de ladite fourchette qui sont destinées à enserrer de manière élastique deux zones diamétralement opposées du fond de ladite gorge et qui se terminent par deux organes de préhension.

On notera que ce moyen de verrouillage équipant le bouchon de corps de valve de remplissage selon l'invention permet de sécuriser le montage de ce bouchon formant avantageusement capteur de pression suite au remplissage du circuit en fluide frigorigène, en le verrouillant en position vissée sur ce corps de valve.

Egalement avantageusement, le bouchon selon l'invention peut être équipé d'un moyen souple de liaison au corps de valve qui est monté solidaire de ladite paroi périphérique du bouchon et qui est destiné à être solidarisé avec une zone inférieure du corps de valve située axialement en dessous du bouchon à l'état vissé, cette zone étant formée de préférence par une saignée circonférentielle de ladite face radialement externe du corps de valve.

On notera que ce moyen souple de liaison, tel qu'un collier monté dans cette saignée circonférentielle du corps de valve et relié au bouchon par un lien rendu solidaire de ce dernier, permet de ne pas perdre le bouchon lors de l'opération de remplissage de la valve en l'ayant toujours à portée de main (i.e. après que ce bouchon a été dévissé et retiré du corps de valve).

On peut en outre prévoir de former d'un seul tenant sur une face sommitale du bouchon selon l'invention des moyens (e.g. constitués d'empreintes en creux ou en relief) pour faciliter le vissage et le dévissage du bouchon dudit corps de valve au moyen d'un outil de vissage/ dévissage, tel qu'un tournevis par exemple.

Un ensemble selon l'invention d'un corps de valve de remplissage en fluide frigorigène à haute pression d'un circuit de climatisation pour véhicule automobile et d'un bouchon vissé sur ce corps de valve, lequel présente une face radialement interne sur laquelle est formé un filetage de valve recevant un mécanisme de valve et une face radialement externe en partie recouverte par une paroi périphérique du bouchon, est caractérisé en ce que ce bouchon est tel que défini ci-dessus.

Selon une autre caractéristique de l'invention, ledit corps de valve de cet ensemble présente :
- ladite face radialement externe selon la norme SAE J639, avec une section axiale qui est conçue pour s'adapter de manière étanche à un raccord de remplissage en fluide réfrigérant à haute pression et qui comporte une gorge circonférentielle de section axiale sensiblement trapézoïdale adaptée pour coopérer avec des billes de ce raccord, et
- ladite face radialement interne qui comporte, axialement au-dessus dudit filetage de valve, un filetage auxiliaire sur lequel est vissé un embout interne du bouchon coaxial à ladite paroi périphérique et, axialement au-dessus de ce filetage auxiliaire, une portée cylindrique recevant un joint d'étanchéité annulaire qui est monté au contact de cet embout.

Comme indiqué ci-dessus, on notera que la face radialement interne du corps de valve sert à la fois au montage par vissage du mécanisme de valve et du bouchon.

Egalement en référence à ce qui vient d'être dit, une partie inférieure de ladite paroi périphérique du bouchon de cet ensemble selon l'invention peut être équipée d'un moyen de verrouillage du bouchon sur ledit corps de valve, qui comprend avantageusement une fourchette insérée de manière amovible dans des lumières en arc de cercle formées de manière traversante dans ladite paroi périphérique, de sorte que ladite fourchette se loge au fond de ladite gorge à travers ces lumières, lorsque le bouchon est vissé sur ledit corps de valve.

Un circuit de climatisation pour véhicule automobile selon l'invention, qui comporte une boucle haute pression pourvue d'un corps de valve de remplissage en fluide frigorigène et d'une unité de mesure et/ou de détection de la pression interne à cette boucle, telle qu'une unité comportant un capteur de pression ou un pressostat, est tel que ladite unité est montée sur ledit corps de valve de remplissage en formant un bouchon de protection pour ce dernier tel que défini précédemment selon l'invention.

Avantageusement, ladite boucle haute pression peut alors être dépourvue de tubulure de support séparée pour capteur de pression ou pressostat, et cette boucle incorpore l'ensemble corps de valve de remplissage - bouchon selon l'invention tel que défini précédemment.

D'autres caractéristiques, avantages et détails de la présente invention ressortiront à la lecture de la description suivante d'un exemple de réalisation de l'invention, donné à titre illustratif et non limitatif, ladite description étant réalisée en référence avec les dessins joints, parmi lesquels :
la figure 1 est une vue en perspective d'une canalisation haute pression de circuit de climatisation dont la valve de remplissage en fluide frigorigène est équipée d'un bouchon selon l'invention, et
la figure 2 est une vue en coupe longitudinale de la valve de remplissage de la figure 1 équipée de ce bouchon selon l'invention, l'ensemble valve/ bouchon étant ainsi visible dans un plan de coupe axial.

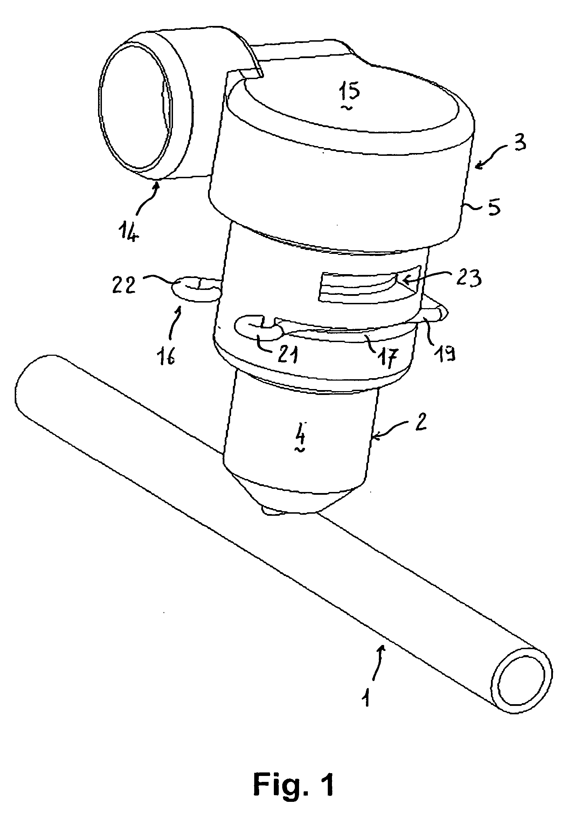

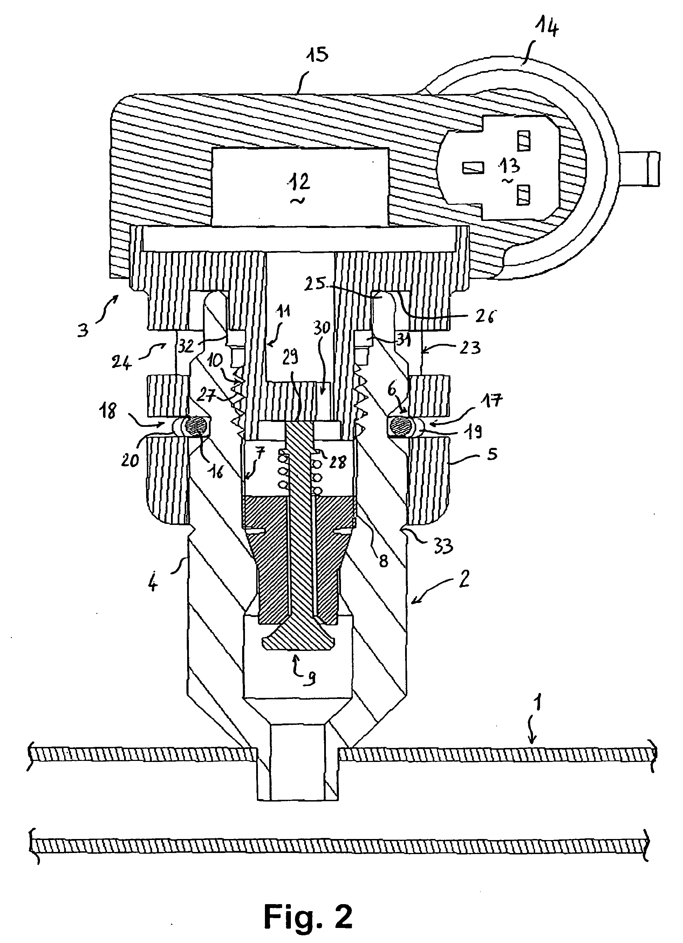

A la canalisation 1 illustrée aux figures 1 et 2 est raccordé de manière connue en soi un corps de valve 2 de remplissage en fluide réfrigérant du circuit de climatisation équipé d'un bouchon 3 selon l'invention qui, comme cela sera décrit ci-après, exerce à la fois une fonction de protection de la valve de remplissage par une fermeture étanche du corps de valve 2 et avantageusement une fonction de capteur de pression et/ou d'indicateur d'une valeur seuil ou limite de la pression interne à cette canalisation 1.

Le corps de valve 2 présente :
- une face radialement externe 4 qui est destinée à être en partie recouverte par une paroi périphérique 5 du bouchon 3 et qui est selon la norme SAE J639, i.e. présentant une section axiale qui est conçue pour s'adapter de manière étanche à un raccord de remplissage en fluide réfrigérant et qui comporte une gorge circonférentielle 6 (figure 2) de section axiale trapézoïdale destinée à coopérer avec des billes de ce raccord, et
- une face radialement interne 7 (voir figure 2) sur laquelle est formé, d'une part, un filetage de valve 8 recevant de manière connue un mécanisme de valve 9 et, d'autre part, un filetage auxiliaire 10 formé axialement au-dessus du filetage de valve 8 et recevant, selon l'invention, un embout radialement interne 11 du bouchon 3 venant coopérer avec ce mécanisme de valve 9 pour la mesure ou l'indication de la pression.

Le bouchon 3 selon l'invention est pourvu d'une unité 12 de mesure et/ou de détection de la pression qui est reliée à une connectique électrique 13 logée dans un fourreau 14 formé d'un seul tenant avec le sommet 15 de la paroi périphérique 5 du bouchon 3, cette connectique 13 étant réalisée de manière connue en soi pour la conception d'un capteur de pression de circuit de climatisation.

La paroi périphérique 5 du bouchon 3 est avantageusement équipée, dans sa partie inférieure, d'une fourchette de verrouillage 16 du bouchon 3 sur le corps de valve 2 qui, dans l'exemple de réalisation des figures 1 et 2, est insérée de manière amovible dans deux lumières 17 et 18 en arc de cercle formées de manière radialement traversante dans la paroi 5 en venant se coincer élastiquement dans la gorge 6 du corps de valve 2 lorsque l'embout interne 11 du bouchon 3 est vissé sur ce corps de valve 2. La fourchette 16 présente sensiblement une forme de U dont les ailes sont formées par deux branches 19 et 20 enserrant élastiquement deux zones diamétralement opposées du fond de la gorge 6 et se terminant par deux organes de préhension 21 et 22. Dans l'exemple des figures 1 et 2, la paroi périphérique 5 du bouchon 3 est en outre pourvue de deux autres lumières 23 et 24 en arc de cercle qui sont formées axialement au dessus des lumières 17 et 18 recevant la fourchette de verrouillage 16 et à proximité immédiate du bord axialement supérieur 25 du corps de valve 2, lequel bord 25 est monté sous et contact d'une portion de liaison 26 radiale (i.e. horizontale à la figure 2) du bouchon 3 qui relie l'embout 11 à la paroi périphérique 5.

Cet embout interne 11 du bouchon 3 est formé coaxialement d'un seul tenant avec cette paroi périphérique 5 et, par une surface latérale externe 27 globalement cylindrique et filetée qu'il présente, est apte à être vissé sur le filetage auxiliaire interne 10 du corps de valve 2 de sorte à actionner la tige 28 du mécanisme de valve 9 dans une position vissée du bouchon 3, par un tronçon central et radial 29 de l'embout normal à cette surface 27 venant appuyer sur cette tige 28 en faisant communiquer du fait de cet actionnement mécanique (réversible par dévissage du bouchon 3) l'intérieur du mécanisme de valve 9 avec un espace radialement interne à l'embout 11 qui débouche sur l'unité 12 de mesure/ détection de pression. A cet effet et comme illustré à la figure 2, l'embout 11 est avantageusement traversé par plusieurs canaux axiaux 30 (par exemple au nombre de trois, un seul étant visible à la figure 2) débouchant dans le tronçon d'appui 29 autour d'une zone centrale de ce dernier.

La surface latérale externe 27 de l'embout 11 comprend, axialement au-dessus de la zone filetée venant se visser sur le filetage auxiliaire 10 du corps de valve 2 pour le vissage et le dévissage du bouchon 3, une zone d'étanchéité axialement supérieure entourée d'un joint d'étanchéité annulaire 31 (e.g. un joint plat ou torique) qui est conçu pour assurer l'étanchéité de l'espace annulaire compris entre l'embout 11 et le filetage auxiliaire 10 en étant monté contre une portée verticale cylindrique 32 du corps de valve 2 prolongeant vers le haut ce filetage auxiliaire 10.

Avantageusement, le bouchon 3 selon l'invention est en outre équipé d'un moyen souple de liaison (non représenté) au corps de valve 2 qui est fixé, d'une part, dans une saignée circonférentielle 33 de la face externe 4 du corps de valve 2 située en dessous du bouchon 3 à l'état vissé en formant un collier solidaire de ce corps de valve 2 et, d'autre part, à la paroi périphérique 5 du bouchon 3. De cette manière, le bouchon 3 est maintenu relié au corps de valve 2 pendant le remplissage, évitant ainsi la recherche malaisée de ce bouchon 3 dans un espace difficile d'accès pour l'opérateur.

En résumé, on notera que ce bouchon selon l'exemple de réalisation des figures 1 et 2 exerce notamment les fonctions suivantes :
- protection de la valve avant l'opération de remplissage en fluide frigorigène du circuit de climatisation,
- accessibilité améliorée du bouchon 3 lors de cette opération du fait de sa liaison au corps de valve 2,
- mesure et/ou détection d'une variable de fonctionnement interne à la boucle haute pression de ce circuit, et
- sécurisation optimale du vissage de ce bouchon 3 dans ce mode de mesure/ détection du fait de son verrouillage sur le corps de valve 2.

## Revendications

1. Bouchon (3) pour corps de valve de remplissage (2) en fluide frigorigène d'un circuit de climatisation pour véhicule automobile, le corps de valve présentant, d'une part, une face radialement interne (7) sur laquelle est formé un filetage de valve (8) recevant un mécanisme de valve (9) et, d'autre part, une face radialement externe (4) qui est destinée à être en partie recouverte par une paroi périphérique (5) du bouchon, **caractérisé en ce que** le bouchon comporte, radialement vers l'intérieur de ladite paroi périphérique, des moyens d'accès (11) à au moins une variable de fonctionnement du circuit, telle que la pression interne de fluide réfrigérant y circulant, ces moyens étant aptes à être vissés sur ladite face radialement interne du corps de valve pour actionner réversiblement le mécanisme de valve de sorte à faire communiquer ce dernier avec une unité de mesure (12) de ladite variable et/ou de détection d'une valeur seuil de celle-ci que comporte le bouchon.

2. Bouchon (3) pour corps de valve de remplissage (2) selon la revendication 1, **caractérisé en ce que** ladite face radialement externe (4) dudit corps de valve (2) répond à la norme SAE J639, présentant une section axiale qui est conçue pour s'adapter de manière étanche à un raccord de remplissage en fluide réfrigérant à haute pression et qui comporte une gorge circonférentielle (33) de section axiale sensiblement trapézoïdale destinée à coopérer avec des billes de ce raccord.

3. Bouchon (3) pour corps de valve de remplissage (2) selon la revendication 1 ou 2, **caractérisé en ce que** lesdits moyens d'accès à une variable de fonctionnement du circuit comprennent un embout interne (11) qui est formé coaxialement d'un seul tenant avec ladite paroi périphérique (5) et qui, par une surface latérale radialement externe (27) qu'il présente, est apte à être vissé sur un filetage auxiliaire (10) formé sur ladite face interne (7) du corps de valve axialement au-dessus dudit filetage de valve (8) et qui, par un tronçon central (29) dudit embout normal à cette surface, est apte à actionner ledit mécanisme de valve (9) via ce vissage, au moins un canal (30) débouchant en ledit tronçon étant ménagé dans cet embout pour faire communiquer ledit mécanisme de valve avec ladite unité de mesure et/ou de détection (12), laquelle surmonte axialement ledit embout.

4. Bouchon (3) pour corps de valve de remplissage (2) selon la revendication 3, **caractérisé en ce que** ladite surface latérale de l'embout (11) comprend :
- une zone filetée (27) axialement inférieure conçue pour se visser sur ledit filetage auxiliaire (10), et
- une zone d'étanchéité axialement supérieure entourée d'un joint d'étanchéité annulaire (31) qui est conçu pour assurer l'étanchéité de l'espace annulaire compris entre ledit embout et ledit filetage auxiliaire en étant monté contre une portée cylindrique (32) dudit corps de valve prolongeant vers le haut ledit filetage auxiliaire.

5. Bouchon (3) pour corps de valve de remplissage (2) selon la revendication 3 ou 4, **caractérisé en ce que** ledit embout (11) est traversé par une pluralité de canaux axiaux (30) débouchant dans ledit tronçon d'embout (29) autour d'une zone centrale d'appui de ce dernier adaptée pour actionner une tige (28) dudit mécanisme de valve (9).

6. Bouchon (3) pour corps de valve de remplissage (2) selon une des revendications précédentes, **caractérisé en ce que** ladite unité (12) est une unité de mesure de la pression interne au circuit de climatisation, comprenant un capteur de pression qui surmonte axialement lesdits moyens d'accès (11) en communiquant avec ces derniers.

7. Bouchon (3) pour corps de valve de remplissage (2) selon une des revendications 1 à 5, **caractérisé en ce que** ladite unité (12) est une unité de détection d'une valeur seuil de la pression interne au circuit de climatisation, comprenant un pressostat ou un interrupteur qui surmonte axialement lesdits moyens d'accès (11) en communiquant avec ces derniers, cette unité étant apte à commander des modes de fonctionnement d'un compresseur inclus dans le circuit de climatisation et/ou à prévenir des dysfonctionnements dudit circuit.

8. Bouchon (3) pour corps de valve de remplissage (2) selon la revendication 6 ou 7, **caractérisé en ce que** ladite unité (12) est reliée à une connectique (13) logée dans un fourreau (14) qui est formé d'un seul tenant avec une partie sommitale (15) de ladite paroi périphérique (5) du bouchon.

9. Bouchon (3) pour corps de valve de remplissage (2) selon une des revendications précédentes, **caractérisé en ce qu'**une partie inférieure de ladite paroi périphérique (5) du bouchon est équipée d'un moyen de verrouillage (16) du bouchon sur ledit corps de valve.

10. Bouchon (3) pour corps de valve de remplissage (2) selon la revendication 9, **caractérisé en ce que** ledit moyen de verrouillage comprend une fourchette (16) insérée de manière amovible dans au moins une lumière (17, 18) en arc de cercle qui est formée dans ladite paroi périphérique (5) en étant conçue pour se trouver en regard d'une gorge circonférentielle (6) que présente ledit corps de valve lorsque le bouchon est vissé sur ce dernier, de sorte que ladite fourchette se loge au fond de ladite gorge à travers ladite ou chaque lumière.

11. Bouchon (3) pour corps de valve de remplissage (2) selon la revendication 10, **caractérisé en ce que** ladite fourchette (16) présente sensiblement une forme de U dont les ailes sont formées par deux branches (19 et 20) de ladite fourchette qui sont destinées à enserrer de manière élastique deux zones diamétralement opposées du fond de ladite gorge (6) et qui se terminent par deux organes de préhension (21 et 22).

12. Bouchon (3) pour corps de valve de remplissage (2) selon une des revendications précédentes, **caractérisé en ce qu'**il est équipé d'un moyen souple de liaison au corps de valve qui est monté solidaire de ladite paroi périphérique (5) du bouchon et qui est destiné à être solidarisé avec une zone inférieure du corps de valve située axialement en dessous du bouchon à l'état vissé, cette zone étant formée de préférence par une saignée circonférentielle (33) de ladite face radialement externe (4) du corps de valve.

13. Bouchon (3) pour corps de valve de remplissage (2) selon une des revendications précédentes, **caractérisé en ce que** des moyens pour faciliter son vissage et son dévissage dudit corps de valve au moyen d'un outil de vissage/ dévissage, tel qu'un tournevis, sont formés d'un seul tenant sur une face sommitale (15) du bouchon.

14. Ensemble d'un corps de valve de remplissage (2) en fluide frigorigène à haute pression d'un circuit de climatisation pour véhicule automobile et d'un bouchon (3) vissé sur ce corps de valve, lequel présente une face radialement interne (7) sur laquelle est formé un filetage de valve (8) recevant un mécanisme de valve (9) et une face radialement externe (4) en partie recouverte par une paroi périphérique (5) du bouchon, **caractérisé en ce que** le bouchon est tel que défini à l'une des revendications précédentes.

15. Ensemble d'un corps de valve de remplissage (2) et d'un bouchon (3) selon la revendication 14, **caractérisé en ce que** ledit corps de valve présente :
- ladite face radialement externe (4) selon la norme SAE J639, avec une section axiale qui est conçue pour s'adapter de manière étanche à un raccord de remplissage en fluide réfrigérant à haute pression et qui comporte une gorge circonférentielle (6) de section axiale sensiblement trapézoïdale adaptée pour coopérer avec des billes de ce raccord, et
- ladite face radialement interne (7) qui comporte, axialement au-dessus dudit filetage de valve (8), un filetage auxiliaire (10) sur lequel est vissé un embout interne (11) du bouchon coaxial à ladite paroi périphérique (5) et, axialement au-dessus de ce filetage auxiliaire, une portée cylindrique (32) recevant un joint d'étanchéité annulaire (31) qui est monté au contact de cet embout.

16. Ensemble d'un corps de valve de remplissage (2) et d'un bouchon (3) selon la revendication 15, **caractérisé en ce qu'**une partie inférieure de ladite paroi périphérique (5) du bouchon est équipée d'un moyen de verrouillage du bouchon sur ledit corps de valve, qui comprend une fourchette (16) insérée de manière amovible dans des lumières (17 et 18) en arc de cercle formées de manière traversante dans ladite paroi périphérique, de sorte que ladite fourchette se loge au fond de ladite gorge (6) à travers ces lumières, lorsque le bouchon est vissé sur ledit corps de valve.

17. Circuit de climatisation pour véhicule automobile comportant une boucle haute pression pourvue d'un corps de valve de remplissage (2) en fluide frigorigène et d'une unité (12) de mesure et/ou de détection de la pression interne à cette boucle, telle qu'une unité comportant un capteur de pression ou un pressostat, **caractérisé en ce que** ladite unité est montée sur ledit corps de valve de remplissage en formant un bouchon (3) de protection pour ce dernier selon une des revendications 1 à 13.

18. Circuit de climatisation selon la revendication 17, **caractérisé en ce que** ladite boucle haute pression est dépourvue de tubulure de support séparée pour capteur de pression ou pressostat, et incorpore un ensemble corps de valve de remplissage (2) - bouchon (3) selon une des revendications 14 à 16.

## Patentansprüche

1. Kappe (3) für einen Ventilkörper (2) zum Auffüllen mit kälteerzeugendem Fluid von einem Klimaanlagenkreislauf für Kraftfahrzeuge, wobei der Ventilkörper einerseits eine radiale Innenfläche (7), auf der ein Ventilgewinde (8) ausgebildet ist, das einen Ventilmechanismus (9) aufnimmt, und andrerseits eine radiale Außenfläche (4), die dazu bestimmt ist, teilweise von einer Umfangswand (5) der Kappe bedeckt zu sein, aufweist, **dadurch gekennzeichnet, dass** die Kappe radial zum Inneren der Umfangswand eine Zugangseinrichtung (11) zu zumindest einer Funktionsvariable des Kreislaufes aufweist, wie z.B. dem Innendruck des Kühlfluids, das dort zirkuliert, wobei diese Einrichtung in der Lage ist, auf die radiale Innenfläche des Ventilskörpers geschraubt zu sein, um den Ventilmechanismus in der Weise reversibel zu betätigen, dass dieser mit einer Einheit (12) zum Messen der Variable und/oder zum Erfassen eines Schwellwertes von dieser, den die Verschlussklappe aufweist, verbunden wird.

2. Kappe (3) für einen Ventilkörper (2) zum Auffüllen nach Anspruch 1, **dadurch gekennzeichnet, dass** die radiale Außenfläche (4) des Ventilskörpers (2) der Norm SAE J 639 entspricht, die einen Axialschnitt hat, der gestaltet ist, um sich in dichter Weise an einen Auffüllanschluss von Kühlfluid mit hohem Druck anzupassen, und der eine Umfangsausnehmung (33) mit im Wesentlichen trapezförmigem Axialschnitt aufweist, die dazu bestimmt ist, mit Kugeln dieses Anschlusses zusammenzuwirken.

3. Kappe (3) für einen Ventilkörper (2) zum Auffüllen nach Anspruch 1 oder 2, **dadurch gekennzeichnet, dass** die Zugangseinrichtung zu einer Funktionsvariable des Kreislaufes ein inneres Ansatzstück (11) aufweist, das mit der Umfangswand (5) koaxial und einstückig ausgebildet ist und das über eine seitliche radiale Außenfläche (27), die dieses aufweist, in der Lage ist, auf ein Hilfsgewinde (10) geschraubt zu sein, das an der Innenfläche (7) des Ventilkörpers axial oberhalb des Ventilgewindes (8) ausgebildet ist, und das über einen Mittelabschnitt (29) des Ansatzstücks, der zu dieser Fläche senkrecht ist, in der Lage ist, den Ventilmechanismus (9) über dieses Schrauben zu betätigen, wobei ein Kanal (30), der in dem Abschnitt mündet, in diesem Ansatzstück angeordnet ist, damit der Ventilmechanismus mit der Einheit (12) zum Messen und/oder Erfassen, die axial das Ansatzstück überragt, verbunden wird.

4. Kappe (3) für einen Ventilkörper (2) zum Auffüllen nach Anspruch 3, **dadurch gekennzeichnet, dass** die Seitenfläche des Ansatzstücks (11) aufweist:
einen axial unteren Gewindebereich (27), der gestaltet ist, um auf das Hilfsgewinde (10) geschraubt zu werden, und
einen axial oberen Dichtbereich, der von einer ringförmigen Dichtung (31) umgeben ist, die gestaltet ist, um die Dichtheit des Ringraums abzusichern, der sich zwischen dem Ansatzstück und dem Hilfsgewinde befindet, indem eine Montage gegen eine zylindrische Sitzfläche (32) des Ventilkörpers, die das Hilfsgewinde nach oben verlängert, erfolgt.

5. Kappe (3) für einen Ventilkörper (3) zum Auffüllen nach Anspruch 3 oder 4, **dadurch gekennzeichnet, dass** das Ansatzstück (11) von einer Vielzahl an Axialkanälen (30) durchquert ist, die in dem Ansatzstückabschnitt (29) um die mittlere Stützzone von diesem münden, wobei diese angepasst ist, einen Schaft (28) des Ventilmechanismus (9) zu betätigen.

6. Kappe (3) für einen Ventilkörper (2) zum Auffüllen nach einem der vorhergehenden Ansprüche, **dadurch gekennzeichnet, dass** die Einheit (12) eine Einheit zum Messen des Innendrucks des Klimaanlagenkreislaufes ist, die einen Drucksensor aufweist, der axial die Zugangseinrichtung (11) überragt, wobei eine Verbindung mit dieser vorliegt.

7. Kappe (3) für einen Ventilkörper (2) zum Auffüllen nach einem der Ansprüche 1 bis 5, **dadurch gekennzeichnet, dass** die Einheit (12) einem Einheit zum Erfassen eines Schwellwertes für einen Innendruck des Kreislaufes der Klimaanlage ist, die einen Druckregler oder einen Unterbrecher aufweist, der die Zugangseinrichtung (11) axial überragt, wobei eine Verbindung mit dieser vorliegt, wobei diese Einheit in der Lage ist, die Funktionsmodi eines Kompressors zu steuern, der in dem Kreislauf der Klimaanlage enthalten ist, und/oder die Fehlfunktionen des Kreislaufes zu verhindern.

8. Kappe (3) für einen Ventilkörper (2) zum Auffüllen nach Anspruch 6 oder 7, **dadurch gekennzeichnet, dass** die Einheit (12) mit einem Steckverbinder (13) verbunden
ist, der in einer Buchse (14) untergebracht ist, die mit einem Spitzenabschnitt (15) der Umfangswand (5) einstückig ausgebildet ist.

9. Kappe (3) für einen Ventilkörper (2) zum Auffüllen nach einem der vorhergehenden Ansprüche, **dadurch gekennzeichnet, dass** ein unterer Teil der Umfangswand (5) der Kappe mit einer Einrichtung (16) zur Verriegelung der Kappe an dem Ventilkörper ausgerüstet ist.

10. Kappe (3) für einen Ventilkörper (2) zum Auffüllen nach Anspruch 9, **dadurch gekennzeichnet, dass** die Verriegelungseinrichtung eine Gabel (16) aufweist, die in lösbarer Weise in zumindest eine kreisbogenförmige Öffnung (17, 18) eingeführt ist, die in der Umfangswand (5) ausgebildet ist, wobei diese gestaltet ist, dass sich diese gegenüber einer Umfangsausnehmung (6) befindet, die der Ventilkörper aufweist, wenn die Kappe auf letztgenannten geschraubt ist, und zwar in der Weise, dass die Gabel am Boden der Ausnehmung durch die oder jede Öffnung hindurch untergebracht ist.

11. Kappe (3) für einen Ventilkörper (2) zum Auffüllen nach Anspruch 10, **dadurch gekennzeichnet, dass** die Gabel (16) eine im Wesentlichen U-Form aufweist, deren Schenkel durch zwei Zweige (19 und 20) der Gabel gebildet sind, die dazu bestimmt sind, in elastischer Weise zwei diametral entgegensetzte Bereiche des Bodens der Ausnehmung (6) zu umschließen, und die mit zwei Greifelementen (21 und 22) enden.

12. Kappe (3) für einen Ventilkörper (2) zum Auffüllen nach einem der vorhergehenden Ansprüche, **dadurch gekennzeichnet, dass** diese mit einer elastischen Einrichtung zur Verbindung mit dem Ventilkörper ausgerüstet ist, die mit der Umfangswand (5) der Kappe (3) fest verbunden ist und die dazu bestimmt ist, mit einem unteren Bereich des Ventilkörpers, der sich in einem verschraubten Zustand axial unterhalb der Kappe befindet, verbunden zu werden, wobei dieser Bereich vorzugsweise durch eine Umfangsrille (33) der radialen Außenfläche (4) des Ventilkörpers gebildet ist.

13. Kappe (3) für einen Ventilkörper (2) zum Auffüllen nach einem der vorhergehenden Ansprüche, **dadurch gekennzeichnet, dass** eine Einrichtung zum Erleichtern ihres Verschraubens oder Abschraubens in Bezug auf den Ventilkörper über ein Verschraub/Abschraub-Werkzeug, wie z.B. einen Schraubendreher, einstückig an einer Spitzenfläche (15) der Kappe ausgebildet ist.

14. Baugruppe aus einem Ventilkörper (2) zum Auffüllen mit kälteerzeugendem Fluid mit Hochdruck eines Kreislaufes einer Klimaanlage für Kraftfahrzeuge und einer Kappe (3), die auf diesen Ventilkörper geschraubt ist, wobei dieser einer radiale Innenfläche (7), an der ein Ventilgewinde (8) ausgebildet ist, das einen Ventilmechanismus (9) aufnimmt, und eine radiale Außenfläche (4) aufweist, die teilweise mit einer Umfangswand (5) der Kappe bedeckt ist, **dadurch gekennzeichnet, dass** die Kappe eine nach einem der vorhergehenden Ansprüche ist.

15. Baugruppe eines Ventilkörpers (2) zum Auffüllen und einer Kappe nach Anspruch 14, **dadurch gekennzeichnet, dass** der Ventilkörper aufweist:
- die radiale Außenfläche (4) entsprechend der Norm SAE J 639 mit einem Axialschnitt, der gestaltet ist, um sich in dichter Weise an einen Auffüllanschluss von Kühlfluid mit hohem Druck anzupassen, und der eine Umfangsausnehmung (6) mit im Wesentlichen trapezförmigem Axialschnitt aufweist, die dazu bestimmt ist, mit Kugeln dieses Anschlusses zusammenzuwirken
- die radiale Innenfläche (7), die axial oberhalb des Ventilgewindes (8) ein Hilfsgewinde (10), auf das ein Innenansatzstück (11) der Kappe koaxial mit der Umfangswand (5) geschraubt ist, und axial oberhalb dieses Hilfsgewindes eine zylindrische Sitzfläche (32) aufweist, die eine ringförmige Dichtung (31) aufnimmt, die in Berührung mit diesem Ansatzstück montiert ist.

16. Baugruppe eines Ventilkörpers (2) zum Auffüllen und einer Kappe (3) nach Anspruch 15, **dadurch gekennzeichnet, dass** ein unterer Teil der Umfangswand (5) der Kappe mit einer Einrichtung zur Verriegelung der Kappe auf dem Ventilkörper ausgerüstet ist, die eine Gabel (16) aufweist, die in lösbarer Weise in kreisbogenförmige Öffnungen (17, 18) eingeführt ist, die in einer durchquerenden Weise in der Umfangswand ausgebildet sind, und zwar in der Weise, dass die Gabel am Boden der Ausnehmung (6) durch diese Öffnung hindurch untergebracht ist, wenn die Kappe auf den Ventilkörper geschraubt ist.

17. Kreislauf einer Klimaanlage für Kraftfahrzeuge, der einen Hochdruckkreis aufweist, der mit einem Ventilkörper (2) zum Auffüllen mit kälteerzeugendem Fluid und einer Einheit (12) zum Messen und/oder zum Erfassen des Innendrucks in diesem Kreis versehen ist, wie z.B. einer Einheit, die einen Drucksensor oder einen Druckregler aufweist, **dadurch gekennzeichnet, dass** die Einheit auf dem Ventilkörper zum Auffüllen montiert ist, indem eine Kappe (3) zum Schützen davon nach einem der Ansprüche 1 bis 13 gebildet ist.

18. Kreislauf einer Klimaanlage nach Anspruch 17, **dadurch gekennzeichnet, dass** der Hochdruckkreis ohne eine getrennte Stützrohrleitung für den Drucksensor oder Druckregler vorgesehen ist und dieser eine Baugruppe Ventilkörper (2) zum Auffüllen und Kappe (3) nach einem der Ansprüche 14 bis 16 hat.

## Claims

1. A cap (3) for a body of a coolant filling valve (2) of an air conditioning circuit for a motor vehicle, the valve body having, on the one hand, a radially inner face (7) on which a valve thread (8) is formed to receive a valve mechanism (9), and, on the other hand, a radially outer face (4) intended to be partially covered by a peripheral wall (5) of the cap, **characterized in that** the cap includes means (11), located radially towards the inside of said peripheral wall, for accessing at least one operating variable of the circuit, such as the internal pressure of coolant flowing therein, these means being capable of being screwed on to the radially inner face of the valve body so that the valve mechanism is actuated reversibly in order to make the latter communicate with a unit (12) included in the cap for measuring the variable and/or for detecting a threshold value thereof.

2. A cap (3) for a filling valve body (2) according to Claim 1, **characterized in that** said radially outer face (4) of the valve body (2) conforms to the SAE J639 standard, having an axial cross section which is designed to be adapted sealingly to a high-pressure coolant filling connector, and which includes a circumferential groove (33) of substantially trapezoidal axial cross section intended to interact with balls forming part of this connector.

3. A cap (3) for a filling valve body (2) according to Claim 1 or 2, **characterized in that** the means for accessing an operating variable of the circuit comprise an inner end fitting (11) which is formed coaxially in one piece with said peripheral wall (5) and which, by means of a radially outer lateral surface (27) present on this end fitting, is able to be screwed on to an auxiliary thread (10) formed on said inner face (7) of the valve body axially above the valve thread (8), and which, by a central portion (29) of the end fitting perpendicular to this surface is adapted to actuate the valve mechanism (9) by means of this screwing action, at least one channel (30) opening into the aforesaid portion being formed in this end fitting to cause the valve mechanism to communicate with the measurement and/or detection unit (12) which axially surmounts the end fitting.

4. A cap (3) for a filling valve body (2) according to Claim 3, **characterized in that** said lateral surface of the end fitting (11) comprises:
- an axially lower threaded area (27) designed to be screwed on to the auxiliary thread (10), and
- an axially upper sealing area surrounded by an annular sealing gasket (31) which is designed to seal the annular space located between said end fitting and said auxiliary thread by being fitted against a cylindrical portion (32) of the valve body forming an upward extension of the auxiliary thread.

5. A cap (3) for a filling valve body (2) according to Claim 3 or 4, **characterized in that** said end fitting (11) is pierced by a plurality of axial channels (30) opening into the end fitting portion (29) around a central bearing area of this portion which is adapted to actuate a rod (28) of the valve mechanism (9).

6. A cap (3) for a filling valve body (2) according to any of the preceding claims, **characterized in that** said unit (12) is a unit for measuring the internal pressure of the air conditioning circuit, comprising a pressure sensor which axially surmounts the access means (11) and communicates with them.

7. A cap (3) for a filling valve body (2) according to any of Claims 1 to 5, **characterized in that** said unit (12) is a unit for detecting a threshold value of the internal pressure of the air conditioning circuit, comprising a pressure switch or other switch which axially surmounts the access means (11) and communicates with them, the unit being adapted to control operating modes of a compressor included in the air conditioning circuit and/or to prevent malfunctions of the circuit.

8. A cap (3) for a filling valve body (2) according to Claim 6 or 7, **characterized in that** said unit (12) is connected to a terminal (13) housed in a casing (14) formed in one piece with a top part (15) of said peripheral wall (5) of the cap.

9. A cap (3) for a filling valve body (2) according to any of the preceding claims, **characterized in that** a lower part of the peripheral wall (5) of the cap is provided with a means (16) for locking the cap on said valve body.

10. A cap (3) for a filling valve body (2) according to Claim 9, **characterized in that** said locking means comprises a fork (16) inserted removably into at least one gap (17, 18) in the shape of an arc of a circle which is formed in said peripheral wall (5) and which is designed to face a circumferential groove (6) present in the valve body when the cap is screwed on to the latter, in such a way that the fork is housed at the bottom of the groove through the gap or through each of the gaps.

11. A cap (3) for a filling valve body (2) according to Claim 10, **characterized in that** said fork (16) is substantially U-shaped, with its stems formed by two branches (19 and 20) of the fork which are intended to clamp in a resilient manner two diametrically opposite areas of the bottom of the groove (6) and which terminate in two gripping members (21 and 22).

12. A cap (3) for a filling valve body (2) according to any of the preceding claims, **characterized in that** it is provided with a flexible means for connection to the valve body, this means being fitted by fixing to said peripheral wall (5) of the cap and being intended to be fixed to a lower area of the valve body located axially below the cap in the screwed-on condition, this area preferably being formed by a circumferential channel (33) in said radially outer face (4) of the valve body.

13. A cap (3) for a filling valve body (2) according to any of the preceding claims, **characterized in that** means for facilitating the screwing of the cap on to the valve body and unscrewing it therefrom, by means of a screwing and unscrewing tool such as a screwdriver, are formed in one piece with a top face (15) of the cap.

14. An assembly composed of a high-pressure coolant filling valve body (2) of an air conditioning circuit for a motor vehicle and a cap (3) screwed on to this valve body, the cap having a radially inner face (7), on which is formed a valve thread (8) receiving a valve mechanism (9), and a radially outer face (4) partially covered by a peripheral wall (5) of the cap, **characterized in that** the cap is as defined in any of the preceding claims.

15. An assembly composed of a filling valve body (2) and a cap (3) according to Claim 14, **characterized in that** the valve body has:
- said radially outer face (4) according to the SAE J639 standard, with an axial cross section designed to be adapted sealingly to a high-pressure coolant filling connector, and which includes a circumferential groove (6) of substantially trapezoidal axial cross section intended to interact with balls forming part of this connector, and
- said radially inner face (7) which includes, axially above said valve thread (8), an auxiliary thread (10) on to which is screwed an inner end fitting (11) of the cap which is coaxial with said peripheral wall (5) and, axially above this auxiliary thread, a cylindrical portion (32) receiving an annular sealing gasket (31) which is mounted in contact with this end fitting.

16. An assembly composed of a filling valve body (2) and a cap (3) according to Claim 15, **characterized in that** a lower part of said peripheral wall (5) of the cap is provided with a means for locking the cap on said valve body, comprising a fork (16) inserted removably into gaps (17 and 18) in the shape of an arc of a circle formed in a penetrating manner in the peripheral wall, in such a way that the fork is housed at the bottom of said groove (6) through the gaps when the cap is screwed on to the valve body.

17. An air conditioning circuit for a motor vehicle, including a high-pressure loop having a coolant filling valve body (2) and a unit (12) for measuring and/or detecting the internal pressure of this loop, such as a unit including a pressure sensor or a pressure switch, **characterized in that** the unit is mounted on the filling valve body to form a protective cap (3) for the latter according to any of Claims 1 to 13.

18. An air conditioning circuit according to Claim 17, **characterized in that** the high-pressure loop has no separate support tubing for a pressure sensor or pressure switch, and incorporates an assembly composed of a filling valve body (2) and a cap (3) according to any of Claims 14 to 16.
